# EUROPÄISCHE PATENTSCHRIFT

(11) **EP 1 008 516 B1**
(45) Veröffentlichungstag und Bekanntmachung des Hinweises auf die Patenterteilung: **19.11.2003**
(21) Anmeldenummer: 99121636.7
(22) Anmeldetag: 30.10.1999
(51) Int. Cl.: B64G 1/64, B64G 1/10

(54) **Vorrichtung zum Aussetzen von Satelliten**
Satellite dispenser device
Dispositif d'éjection de satellites

(30) Priorität: 09.12.1998 DE 19856670
(43) Veröffentlichungstag der Anmeldung: 14.06.2000
(73) Patentinhaber: Astrium GmbH, 85521 Ottobrunn (DE)
(72) Erfinder: Hornung, Ernst, 28816 Stuhr (DE); Ory, Huba, Prof. Dr.-Ing., 52074 Aachen (DE); Rittweger, Andreas, Dr.-Ing., 28832 Achim (DE); Quadt, Markus, 28203 Bremen (DE); Borgwardt, Peter, 28357 Bremen (DE); Bolz, Jörg, 28777 Bremen (DE)
(74) Vertreter: Hansmann, Dierk, Dipl.-Ing.

(56) Entgegenhaltungen:
- US-A- 5 411 226
- US-A- 5 605 308
- US-A- 5 613 653
- US-A- 5 720 450

## Beschreibung

Die Erfindung betrifft eine Vorrichtung zum Aussetzen von mehreren Satelliten, deren Außen-Teilschalen als Zylindersegmente ausgebildet und die um eine Zentralstruktur angeordnet sind, wobei die Satelliten zu einer Nutzlast zusammengefaßt und mittels Spannbändern lösbar miteinander verbunden sind, sowie mit einer die Nutzlast mit einer Trägerrakete lösbar verbindenden Adaptereinheit.

Einige der modernen Telekommunikationssysteme sind auf einer Reihe von Einzelsatelliten aufgebaut, die nach einem vorgegebenen Ordnungsprinzip hintereinander auf ihre Umlaufbahn gesetzt werden müssen. So sieht beispielsweise das sogenannte Constellation-Projekt vor, zehn Satelliten gleichzeitig mit Hilfe nur einer Trägerrakete zu starten. Nach dem Erreichen der Umlaufbahn soll dann eine eigens hierfür vorgesehen Vorrichtung, der sogenannte Dispenser, einen Satelliten nach dem anderen aussetzen.

Eine Vorrichtung zum Aussetzen von Satelliten gemäß dem Oberbegriff des Anspruchs 1 ist bekannt aus der US 5 411 226.

Bei bereits bekannten Dispensern sind die Satelliten einzeln auf bzw. an einer zentralen tragenden Primärstruktur befestigt, welche dann dem gesamten Kraftfluß während der Startphase und des Fluges ausgesetzt ist. So sind bei einer aus der US 5 411 226 bekannt gewordenen Vorrichtung der eingangs genannten Art insgesamt sechs Satelliten in zwei Ebenen übereinanderliegend an sternförmig angeordneten Tragplatten gehaltert. Eine ähnliche Anordnung ist auch aus der US 5 613 653 bekannt geworden, bei der ein zentraler Mast bzw. ein Zentralrohr die Satelliten trägt. In beiden Fällen muß die zu diesem Zweck verwendete zentrale Struktur sehr stabil und damit notwendigerweise auch schwer sein, um die erforderliche Festigkeit und Steifigkeit zu gewährleisten.

Nach dem ebenfalls bereits bekannten Prinzip des sogenannten Iridium-Dispeners sind mehrere Satelliten auf einer tellerartigen Adapterscheibe einzeln befestigt, und jeder Satellit besitzt einen eigenen Freigabemechanismus. Die Adapterscheibe kann dabei mit einem Antrieb versehen sein, mittels dessen alle Satelliten in die individuell bestimmten Positionen verbracht und dort ausgesetzt werden. Auch hier sind die Adapterscheibe und der Freigabemechanismus vergleichsweise schwer, um die erforderlichen Steifigkeits- und Festigkeitsanforderungen erfüllen zu können. Eine andere Variante dieses Konzeptes sieht keinen eigenen Antrieb für den Dispenser vor.

Eine weitere bereits bekannte Vorrichtung der eingangs genannten Art, die Teil des sogenannten Globalstar-Konzeptes ist, basiert ebenfalls auf einem Zentralrohr, an dem alle Nutzlasten befestigt werden. Dieses verhältnismäßig dünne Zentralrohr und eine dazugehörige weiche Adapterschale in Form eines flachen Kegeladapters benötigen erneut relativ viel Strukturmasse, um die an sie gestellten Steifigkeitsanforderungen erfüllen zu können.

Aufgabe der Erfindung ist es, eine Vorrichtung der eingangs genannten Art so auszubilden, daß sie bei einem möglichst einfachen und leichten Aufbau ein Höchstmaß an Festigkeit und Steifigkeit gewährleistet.

Die Erfindung löst diese Aufgabe, indem sie vorsieht, daß bei einer derartigen Vorrichtung die Satelliten an ihrer jeweils oberen und unteren Außenkante mit konischen Ringsegmenten versehen und so um die Zentralstruktur angeordnet sind, daß ihre Außen-Teilschalen eine vollständige Zylinderschale bilden, wobei die konischen Ringsegmente zusammen in mehreren Ebenen jeweils einen Ring bilden und durch die Spannbänder, die auf an sich bekannte Weise mit einer konischen Innenstruktur versehen sind, zusammengehalten werden, und daß die Adaptereinheit ebenfalls mit konischen Ringsegmenten versehen ist und über gleichfalls mit einer konischen Innenstruktur versehene Spannbänder mit den Satelliten einerseits und mit der obersten Stufe der Trägerrakete andererseits lösbar verbindbar ist.

Grundgedanke der Erfindung ist es dabei, die Satelliten so zu bündeln, daß sie die großen während des Aufstiegs auftretenden Belastungen wie eine zusammenhängende Struktur aufzunehmen vermögen. Dadurch wird eine besonders leichte Bauweise der gesamten Anordnung ermöglicht. Die Erfindung ist in ihrer bevorzugten Ausführungsform für eine Gesamtzahl von zehn Satelliten vorgesehen, die in zwei übereinanderliegenden Ebenen angeordnet und zu einer Nutzlaststruktur zusammengefaßt sind.

Als Spannbänder für die Vorrichtung nach der Erfindung sind insbesondere die aus der DE 42 21 525 C2 bekannten sogenannten Marman-Klemmen mit einem selbsttätig funktionierenden Öffnungsmechanismus geeignet. Es können aber in gleicher Weise auch Spannbänder verwendet werden. die über Spannschrauben radial vorgespannt und nach der Trennung von der Trägerrakete pyrotechnisch gelöst und abgeworfen werden.

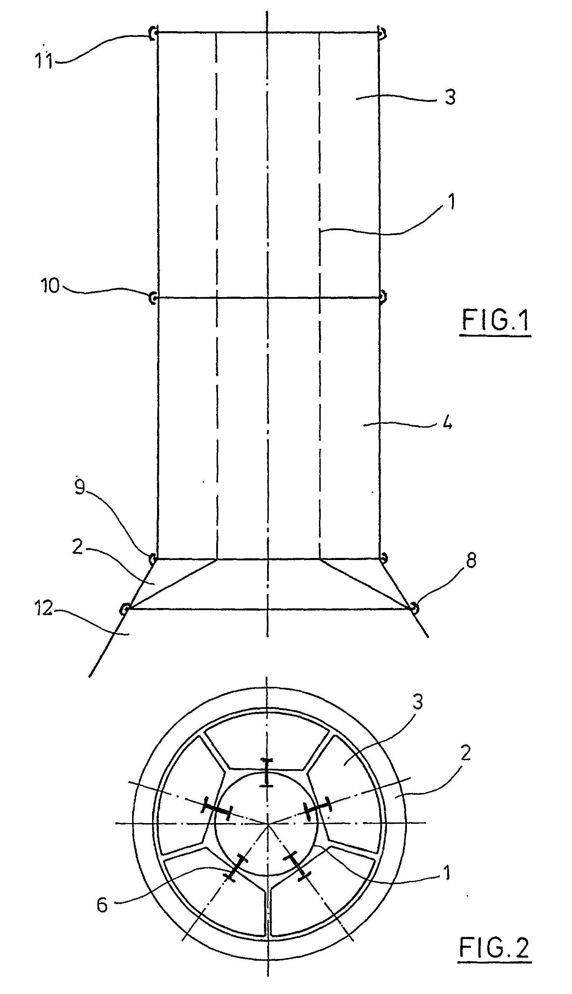

Nachfolgend soll die Erfindung anhand eines in der Zeichnung dargestellten Ausführungsbeispiels näher erläutert werden. Es zeigen
- Fig. 1: eine seitliche Ansicht einer aus mehreren Satelliten gebildeten, in eine Umlaufbahn zu befördernde Nutzlast,
- Fig. 2: eine Draufsicht auf die in Fig. 1 dargestellte Anordnung,
- Fig. 3 und 4: Teilbereiche der Anordnung gemäß Fig. 1 als Tragrahmen eines Einzelsatelliten und
- Fig.5 bis 7: Detaildarstellungen der Anordnung gemäß Fig. 1.

Bei der in den Figuren dargestellten Nutzlast ist ein als leichte Zylinderschale ausgebildetes Zentralrohr 1 fest mit einem schalenförmigen konischen Adapter 2 verbunden. Diese Anordnung dient zugleich als Montagegerüst für die Vorbereitung eines Satellitenstarts sowie als Absetzvehikel oder Dispenser für eine Anzahl von Satelliten 3, 4 - im Fall des hier beschriebenen Ausführungsbeispiels insgesamt zehn - nach Erreichen der Umlaufbahn. Für diese Absetzphase enthält die konische Adapterschale 2 ein in der Figur nicht dargestelltes Antriebs- und Steuermodul, das dann in Funktion tritt, wenn die oberste Stufe einer Trägerrakete nicht selbst die Satelliten aussetzt.

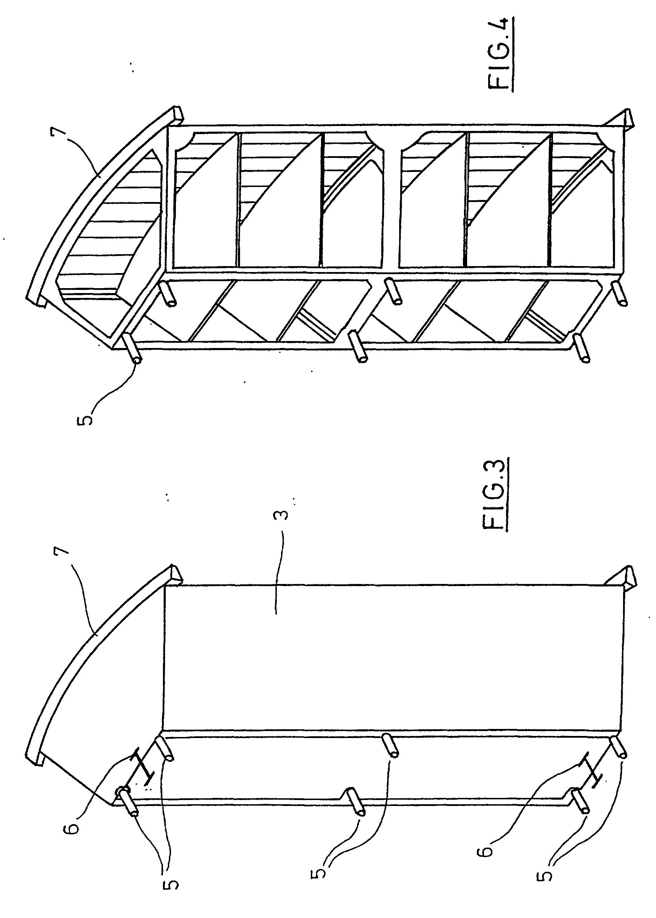

Die Satelliten 3, 4 werden gemäß Figuren 3 und 4 jeweils über einen eigenen Tragrahmen bei ihrer Montage radial auf das Zentralrohr 1 geschoben und mit je sechs Zentrierbolzen 5 positioniert. An den beiden Enden werden sie durch Riegel 6 festgehalten, die später zur Freigabe pyrotechnisch gesprengt werden können. Die Zentrierbolzen 5 dienen zugleich auch als Schubbolzen zur teilweisen Übertragung der Querkräfte.

Die Satelliten 3, 4 tragen an der oberen und unteren Außenkante konische Ringsegmente 7, sogenannte Marman-Ring-Segmente. Diese Ringsegmente 7 bilden zusammen in mehreren, im Fall des hier dargestellten Ausführungsbeispiels drei Ebenen jeweils einen sogenannten Marman-Ring, und werden durch an sich bekannte, mit einer konischen Innenstruktur versehene Spannbänder 8 bis 11, sogenannte Marman-Klemmen, miteinander verbunden. Dadurch bilden die Außen-Teilschalen von jeweils fünf Satelliten 3, 4 eine große Zylinderschale, welche durch die direkte Verbindung zur obersten Stufe 12 einer Trägerrakete die Längs- und Querkräfte sowie Biegemomente der gesamten Nutzlast aufnehmen und dabei aus einer geringen Strukturmasse auch große Längs- und Quersteifigkeiten sicherzustellen vermag.

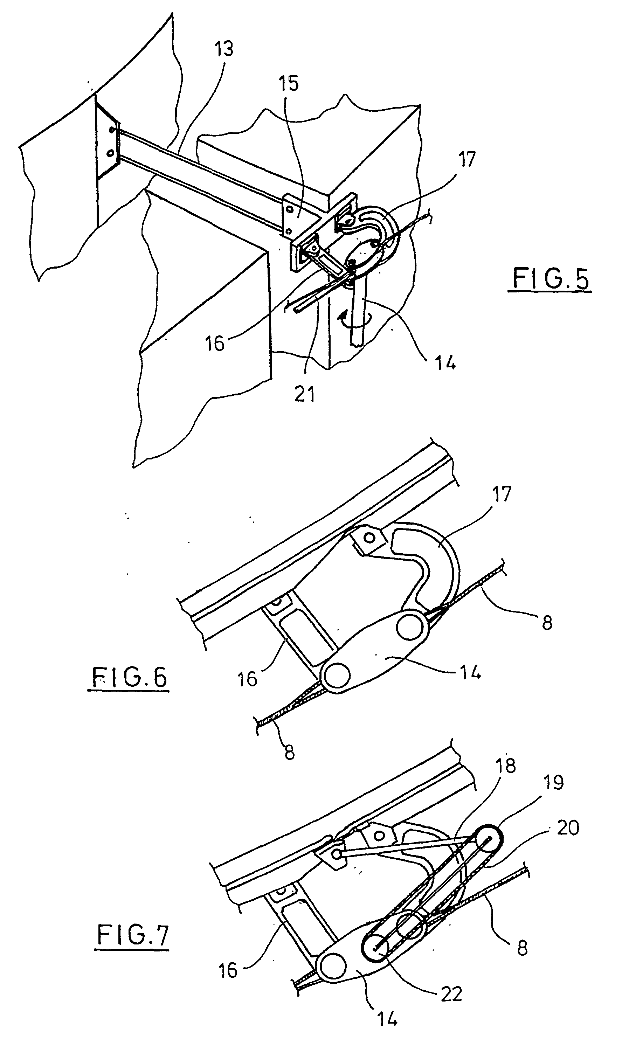

Die Spannbänder 8 bis 11 können mit der aus der DE 4221525 C2 bekannten Anordnung, wie in den Figuren 5 bis 7 dargestellt, geschlossen und geöffnet werden. Sie können aber auch über Spannschrauben radial vorgespannt und nach der Trennung von der Trägerrakete pyrotechnisch gelost und abgeworfen werden.

Die großen Belastungen während des Aufstiegs trägt somit nicht die aus dem Zentralrohr 1 und der Kegelschale 2 gebildete zentrale Struktur, sondern diese wird von den in den Weltraum zu befördernden Satelliten 3, 4 selbst getragen, die mittels der Spannbänder 8 bis 11 mit der obersten Stufe 12 der Trägerrakete sowie untereinander fest verbunden sind.

Einmal auf der Umlaufbahn angekommen, trennt sich die als Absetzvehikel dienende Anordnung von der Trägerrakete durch die Lösung des unteren Spannbandes 8 und fliegt mit den Satelliten 3, 4 autonom weiter zum Bestimmungsort. Alternativ hierzu kann diese Funktion aber auch von der obersten Stufe 12 der Trägerrakete selbst übernommen werden, in diesem Fall trennt sich der Dispenser nicht von dieser obersten Stufe.

Unmittelbar vor dem Aussetzen der Satelliten werden die drei übrigen Spannbänder 9 bis 11 mechanisch gelöst und axial verschoben, um zunächst die oberen fünf Satelliten 3 freizugeben. Dabei wird das oberste Spannband 11 nach oben, die übrigen Spannbänder 9 und 10 axial nach unten verschoben. Die Satelliten 3, 4 bleiben dabei über die Riegel 6 mit der zentralen Struktur fest verbunden. Das Spannband 10 wird nach dem erfolgtem Aussetzen der oberen Reihe von Satelliten 3 nach oben verschoben.

Die in den Figuren 5 bis 7 dargestellte mechanische Lösevorrichtung besitzt den Vorteil einer absolut schockfreien Öffnung. Sie ist auf einem Schwenkarm 13 befestigt und kann nach oben und/oder nach unten verschoben werden, wenn das entsprechende Spannband die Lippen des aus den konischen Segmenten 6 gebildeten zweiteiligen Marman-Ringes verlassen hat.

Der Schwenkarm 13 trägt zusätzlich einen steifen Abstandhalter, der für die Kraftübertragung zwischen den unterbrochenen Marman-Ringen sorgt und nach der Auflösung mit dem Schwenkarm 13 zusammen verschoben wird.

Die Freigabe der Satelliten geschieht durch die Sprengung der Riegel 6. Gleichzeitig sorgen vorgespannte Federn - je eine pro Zentrierbolzen - für das radiale Abstoßen jedes Satelliten. Das geordnete Hinausfahren wird dabei über eine radiale Führung erreicht, welche wie die Schienen einer teleskopischen Schublade funktioniert.

In den Figuren 5 bis 7 ist angedeutet, wie die Spannbänder 8 bis 11 gelöst werden. Dazu wird ein Hebel 14, welcher die beiden Enden des Spannbandes gelenkig aufnimmt, im Uhrzeigersinn um ca. 180° verdreht. Auf einem Schwenkbeschlag 15, an dem auch eine Parallelogrammführung 16, 17 gelagert ist, ist eine Pendelstütze 18 drehbar aufgenommen. Am anderen Ende dieser Pendelstütze 18 befindet sich ein elektrischer Stellmotor 19. Dieser Stellmotor 19 dreht dann mittels eines Zahnriemens 20 und eines auf einem Hebel 21 fixierten Zahnrades 22 diesen in die gewünschte Richtung.

## Patentansprüche

1. Vorrichtung zum Aussetzen von Satelliten (3, 4), einschließend mehrere Satelliten (3, 4) deren Außen-Teilschalen als Zylindersegmente ausgebildet sind, eine Zentralstruktur (1) um die die Satelliten (3, 4) angeordnet sind, und eine Adaptereinheit (2) wobei die Satelliten (3, 4) zu einer Nutzlast zusammengefaßt und mittels Spannbändern (10, 11) lösbar miteinander verbunden sind, und die Adaptereinheit dazu geeignet ist, die Nutzlast mit der obersten Stufe (12) einer Trägerrakete lösbar zu verbinden, **dadurch gekennzeichnet, daß** die Satelliten (3, 4) an ihrer jeweils oberen und unteren Außenkante mit konischen Ringsegmenten (7) versehen und so um die Zentralstruktur (1) angeordnet sind, daß ihre Außen-Teilschalen eine vollständige Zylinderschale bilden, wobei die konischen Ringsegmente (7) zusammen in mehreren Ebenen jeweils einen Ring bilden und durch die Spannbänder (10, 11), die auf an sich bekannte Weise mit einer konischen Innenstruktur versehen sind, zusammengehalten werden, und daß die Adaptereinheit (2) ebenfalls mit konischen Ringsegmenten (7) versehen ist und über gleichfalls mit einer konischen Innenstruktur versehene Spannbänder (8, 9) mit den Satelliten (3, 4) einerseits und mit der obersten Stufe (12) der Trägerrakete andererseits lösbar verbindbar ist.

2. Vorrichtung nach Anspruch 1, **dadurch gekennzeichnet, daß** die Satelliten (3, 4) in mehreren übereinanderliegenden Ebenen angeordnet und zu einer Nutzlaststruktur zusammengefaßt sind.

## Claims

1. A device for releasing satellites (3, 4), including several satellites (3, 4), the outer shell sections of which take the form of cylinder segments, a central structure (1), around which the satellites (3, 4) are arranged, and an adapter unit (2), said
satellites (3, 4) being combined to form a payload and being detachably connected to one another by means of tightening straps (10, 11), and the adapter unit being suitable for detachably connecting the payload to the uppermost stage (12) of a carrier rocket, **characterised in that** the satellites (3, 4) are provided on their upper and lower outer edges with conical annular segments (7) and are so arranged around the central structure (1) that their outer shell sections form a complete cylindrical shell, the conical annular segments (7) together forming a ring in each of several planes and being held together by the tightening straps (10, 11) which are provided with a conical inner structure in a manner known as such, and **in that** the adapter unit (2) is also provided with conical annular segments (7) and is capable of being detachably connected via tightening straps (8, 9), which are likewise provided with a conical inner structure, to the satellites (3, 4) on the one hand and to the uppermost stage (12) of the carrier rocket on the other hand.

2. Device according to Claim 1, **characterised in that** the satellites (3, 4) are arranged in several superposed planes and are combined to form a payload structure.

## Revendications

1. Dispositif d'éjection de satellites (3, 4) comprenant plusieurs satellites (3, 4) dont les coques partielles externes ont été conçues sous la forme de segments cylindriques, une structure centrale autour de laquelle les satellites ont été disposés et une unité adaptatrice, les satellites (3, 4) ayant été assemblés en une charge utile et raccordés les uns aux autres de manière flexible à l'aide de colliers tendeurs (10, 11) et l'unité adaptatrice convenant pour raccorder la charge utile de manière flexible au niveau supérieur d'une fusée porteuse, **caractérisé en ce que** les satellites (3, 4) ont été dotés de cerces coniques sur leurs bords supérieur et inférieur et ont été disposés autour de la structure centrale (1) de telle sorte que leurs coques partielles externes forment une coque cylindrique complète, les cerces coniques (7) formant ensemble et sur plusieurs niveaux un anneau et sont maintenus assemblés par l'intermédiaire des colliers tendeurs (10, 11) pourvus, d'une manière connue en tant que telle, d'une structure interne conique, et **en ce que** l'unité adaptatrice (2) est elle aussi dotée de cerces coniques (7) et peut être raccordée de manière flexible aux satellites (3, 4) d'une part et au niveau supérieur (12) de la fusée porteuse d'autre part, par l'intermédiaire de colliers tendeurs (8, 9) dotés eux aussi d'une structure interne conique.

2. Dispositif selon la revendication 1, **caractérisé en ce que** les satellites (3, 4) ont été disposés sur plusieurs niveaux superposés et assemblés en une structure de charge utile.
